(19) Europäisches Patentamt
European Patent Office
Office européen des brevets

(11) EP 1 772 704 A1

(12) **EUROPEAN PATENT APPLICATION**
published in accordance with Art. 158(3) EPC

(43) Date of publication:
**11.04.2007 Bulletin 2007/15**

(51) Int Cl.:
**G01C 17/38** (2006.01)    **G01R 33/02** (2006.01)

(21) Application number: **05767132.3**

(22) Date of filing: **29.07.2005**

(86) International application number:
**PCT/JP2005/013953**

(87) International publication number:
**WO 2006/011602 (02.02.2006 Gazette 2006/05)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.07.2004 JP 2004011191**

(71) Applicant: **YAMAHA CORPORATION**
**Hamamatsu-shi,**
**Shizuoka-ken 430-8650 (JP)**

(72) Inventors:
• **SATO, Hideki,**
**c/o YAMAHA CORPORATION**
**Hamamatsu-shi,**
**Shizuoka 430-8650 (JP)**

• **WAKUI, Yukio,**
**c/o YAMAHA CORPORATION**
**Hamamatsu-shi,**
**Shizuoka 430-8650 (JP)**
• **OMURA, Masayoshi,**
**c/o YAMAHA CORPORATION**
**Hamamatsu-shi,**
**Shizuoka 430-8650 (JP)**

(74) Representative: **Emde, Eric**
**Wagner & Geyer,**
**Gewürzmühlstrasse 5**
**80538 München (DE)**

(54) **AZIMUTH DATA CALCULATION METHOD, AZIMUTH SENSOR UNIT, AND PORTABLE ELECTRONIC APPARATUS**

(57)    An azimuth data computing method includes the steps of inputting data from a geomagnetic sensor to measure magnetic field data, determining whether measurement data should be stored based on a distance relative to measurement data stored immediately before, calculating an offset value based on the stored measurement data, comparing a plurality of the measurement data used for calculating the offset value with one anther for each component, judging the calculated offset value to be valid when a difference between a maximum value and a minimum value for each component of the measurement data is greater than a predetermined threshold value, updating an previously stored offset value to the offset value judged to be valid, and correcting the measurement data according to the updated offset value to compute azimuth data.

FIG. 2

200: COMPASS SENSOR UNIT
MAGNETIC SENSOR (1)
MAGNETIC SENSOR (2)
MAGNETIC SENSOR (3)
302: SWITCHING MEANS
301: MAGNETIC SENSOR PART
300: COMPASS SENSOR CHIP
303: AMPLIFIER
304: ADDER
305: D/A CONVERTER
306: OFFSET MEMORY PART
307: A/D CONVERTER
207: AZIMUTH MEASURING MEANS
201: MEASUREMENT DATA STORAGE DETERMINING MEANS
202: MEASUREMENT DATA STORING MEANS
203: OFFSET CALCULATING MEANS
204: OFFSET VALIDITY JUDGING MEANS
205: OFFSET STORING MEANS
206: OFFSET SETTING MEANS

EP 1 772 704 A1

**Description**

Technical Field

The present invention relates to a calibration technique (offset correction technique) of azimuth measurement data in finding an azimuth direction using a geomagnetic sensor. In particular, it relates to an azimuth data computing method, a compass sensor unit, and a portable electronic device, which can perform proper calibration even when measurement data obtained from a three-axis geomagnetic sensor are confined in a peculiar plane, whereby a correct azimuth direction is found.

Background Art

There is known a conventional portable terminal, such as a cellular phone set, which is provided with a magnetic sensor for detecting geomagnetism to find a direction based on the geomagnetism detected by the magnetic sensor. The determined azimuth direction is used, for example, to display a map in proper orientation. A new portable terminal has recently appeared on the market, which is provided with a GPS (Global Positioning System) receiver for detecting a position to display a map around its current position in such a manner to orient the map in accordance with the heading of the portable terminal relative to the azimuth direction.

However, since there are extraneous magnetic fields leaked from a loudspeaker, a microphone, a magnetized metallic package for electronic parts, etc. mounted in the portable terminal, a magnetic sensor mounted in the portable terminal detects a mixture of the geomagnetism and other magnetic fields generated from the electronic parts and the like inside the portable terminal. The extraneous magnetic field may cause varying offset in measurement of the azimuth direction. Therefore, calibration is necessary to correct magnetic errors (that is offset) due to the magnetic fields generated from the electronic parts and the like inside the portable terminal. In the case of a conventional portable terminal with a two-axis geomagnetic sensor mounted in it, calibration is performed in such a manner that a user rotates the portable terminal, for example, 180 degrees to collect measurement data from the magnetic sensor during the rotation of the portable terminal so as to estimate offset based on the measurement data.

A technique for calibrating the magnetic sensor mounted in such a portable terminal is disclosed, for example, in Patent document 1. In this technique, the portable terminal is rotated at predetermined angles to estimate offset based on data measured at each angle by the magnetic sensor, thereby performing calibration irrespective of the rotating speed. On the other hand, in order to avoid such a cumbersome operation, there is known a method (for example Patent document 2) that changes two-dimensional or three-dimensional magnetic sensing means for detecting the magnetism, repeatedly acquires output data, determines a reference point on a coordinates.system, and calculates offset information for the output data. According to this method, the coordinates of the reference point is estimated by statistical methods such as to minimize variation of distances between the group of the output data and the reference point for calculating the offset, hence the user can carry out calibration by simply changing orientation of a measurement apparatus in an arbitrary direction.

Patent document 1: Japanese patent laid-open No. 2004-12416
Patent document 2: WO2004/003476

DISCLOSURE OF THE INVENTION

Problem to be Solved by the Invention

However, even in the method disclosed in Patent document 1, the user has to perform calibration by consciously rotating the portable device with the magnetic sensor mounted in it. Although it is less complicated than other conventional methods, since it requires the user to follow the calibration procedure, it remains burdensome for the user to follow the procedure. In particular, in the case of a three-axis geomagnetic sensor, since the calibration requires three-axis data, the user is required to follow a more troublesome procedure. Further according to the method discloses in Patent document 2, a plurality of output data including at least the last data are memorized, then the reference point is obtained by estimation based on the plurality of the output data (the offset is estimated), and thereafter a good value is calculated as the offset upon comparison among a plurality of reference points, or unnecessary measurement data are all A/D converted and stored in case that a good offset is not obtained upon comparison the reference point and each output data, thereby causing problems of increasing work load.

Therefore, in view of the above noted problems, the object of the invention is to provide an azimuth data computing method, compass sensor unit and portable electronic device for carrying out calibration with reducing excessive work load associated to the calculation of offset and without imposing cumbersome operation on the user.

Means for Solving the Problem

In one aspect of the present invention, there is proposed an azimuth data computing method comprising the steps of: inputting data from a geomagnetic sensor to measure magnetic field data; determining whether measurement data should be stored based on a distance relative to measurement data stored immediately before; calculating an offset value based on the stored measurement data; comparing a plurality of the measurement data used for calculating the offset value with one anther for each component and judging the calculated offset value to be valid when a difference between a maximum value and a minimum value for each component of the measurement data is greater than a predetermined threshold value; updating a previously stored offset value to the offset value judged to be valid; and correcting the measurement data according to the updated offset value to compute azimuth data.

In another aspect of the present invention, there is proposed an azimuth data computing method comprising the steps of: inputting data from a geomagnetic sensor to measure magnetic field data; determining whether overflow or underflow occurs to the measured magnetic field data for correcting the measured magnetic field data to fall within a predetermined range when it is determined that the overflow or underflow occurs to the measured magnetic field data; determining whether to store current measured magnetic field data based on a distance between the current measured magnetic field data and previous measured magnetic field data stored immediately before; calculating an offset value based on the stored magnetic field data; comparing a plurality of the measured magnetic field data used for the calculating of the offset value with one anther for each component, and judging the calculated offset value to be valid when a difference between a maximum value and a minimum value for each component of the measured magnetic field data is greater than a predetermined threshold value; updating an already stored offset value to the offset value judged to be valid; and correcting the measured magnetic field data according to the updated offset value to compute azimuth data.

In still another aspect of the present invention, there is proposed an azimuth data computing method comprising the steps of: inputting data from a geomagnetic sensor to measure magnetic field data; determining whether to store current measured magnetic field data based on a distance between the current measured magnetic field data and previous measured magnetic field data stored immediately before; calculating an offset value based on the stored magnetic field data; comparing a plurality of the measured magnetic field data used for the calculating of the offset value with one anther for each component, and judging the calculated offset value to be valid when a difference between a maximum value and a minimum value for each component of the measured magnetic field data is greater than a predetermined threshold value; when the valid offset value is greater than a predetermined reference value, returning to the step of determining whether to store the measured magnetic field data while removing the offset value from each measured magnetic field data; when the valid offset value is smaller than the predetermined reference value, updating an already stored offset value to the valid offset value currently judged to be valid; and correcting the measured magnetic field data according to the updated offset value to compute azimuth data.

In yet another aspect of the present invention, there is proposed a compass sensor unit comprising: a magnetic field data measuring means that inputs data from a geomagnetic sensor to measure magnetic field data; a measurement data storing means that stores the magnetic field data; a measurement data storing determining means that determines whether to store current measured magnetic field data based on a distance between the current measured magnetic field data and previous measured magnetic field data stored immediately before; an offset calculating means that calculates an offset value based on the magnetic field data stored by the measurement data storing means; an offset validity judging means that compares a plurality of the magnetic field data used for calculating the offset data with one anther for each component, and that judges the calculated offset value to be valid when a difference between a maximum value and a minimum value for each component of the magnetic field data is greater than a predetermined threshold value; an offset storing means that updates an already stored offset value to the valid offset value judged to be valid and stores the valid offset value; an offset setting means that adds the valid offset value stored in the offset storing section to the previous offset value stored in the offset storing means; a computing section that removes the offset value set by the offset setting means from the magnetic field data; and an azimuth measuring means that corrects the magnetic field data according to the offset value stored in the offset storing means to compute azimuth data.

The invention further proposes the compass sensor unit which may further comprise an integrator that integrates the magnetic field data outputted from the computing section.

Alternatively, the invention further proposes the compass sensor unit which may further comprise a detection section that monitors the magnetic field data to detect occurrence of overflow or underflow, such that when the occurrence of overflow or underflow of the data is detected, an appropriate correction value is inputted to the computing section to compensate for the overflow or underflow of the data.

Alternatively, the invention further proposes the compass sensor unit which may further comprise an offset magnitude determining means that compares the offset value judged to be valid by the offset validity judging means with a given reference value, the offset magnitude determining means being operative when the valid offset value is greater than the given reference value for outputting the valid offset value to the computing section, or being operative when the valid offset value is smaller than the given reference value for outputting the valid offset value to the azimuth measuring means.

Alternatively, the invention further proposes the compass sensor unit which may further comprise either of: a temperature sensor that detects temperature, and a temperature correction value calculating means that calculates a temperature correction value from the detected temperature and outputs the calculated temperature correction value to the azimuth measuring means; or a tilt sensor that detects a tilt of the geomagnetic sensor, and a tilt correction value calculating means that calculates a tilt correction value from the detected tilt and outputs the calculated tilt correction value to the azimuth measuring means.

Preferably, the invention further proposes the compass sensor unit which may further comprise: a temperature sensor that detects temperature; a temperature correction value calculating means that calculates a temperature correction value from the detected temperature; a tilt sensor that detects a tilt of the geomagnetic sensor; a tilt correction value calculating means that calculates a tilt correction value from the detected tilt; and a correction data determining means that compares current one and previous one of the temperature correction values calculated successively by the temperature correction value calculating means to determine whether to output the current temperature correction value to the azimuth measuring means, and that compares current one and previous one of the tilt correction values calculated successively by the tilt correction value calculating means to determine whether to output the current tilt correction value to the azimuth measuring means.

In yet another aspect of the present invention, there is proposed a portable electronic device provided with the compass sensor unit as set forth in claims 4 through 9.

Further, the invention proposes an azimuth data computing method comprising the steps of: successively measuring a magnetic field detected by a geomagnetic sensor as measurement data; determining whether to store the current measurement data in a storage based on distances between the current measurement data and a plurality of the previous measurement data already stored in the storage; storing the current measurement data in the storage when the current measurement data is determined to be stored; calculating an offset value based on the plurality of the measurement data stored in the storage; updating an old offset value which has been already set to a new offset value which is newly calculated; and correcting the measurement data according to the updated offset value and computing azimuth data.

The invention further proposes the azimuth data computing method further comprising the steps of: comparing a plurality of the measurement data used for the calculating of the offset value with one anther for each component, and judging the calculated offset value to be valid when a difference between a maximum value and a minimum value for each component of the measurement data is greater than a predetermined threshold value, wherein the step of the updating updates the old offset value based on the new offset value when the new offset value is judged to be valid.

Still further the invention proposes the azimuth data computing method, wherein the step of determining determines to store the measurement data when each of the distances on coordinates exceed a predetermined distance.

Further the invention proposes an azimuth data computing method comprising the steps of: sequentially measuring a magnetic field detected by a geomagnetic sensor as measurement data in response to a request from an application program which uses azimuth data; storing the measurement data in a storage; erasing an oldest one of the stored measurement data from the storage when a number of the stored measurement data reaches a predetermined number while storing a new one of the measurement data in the storage; calculating an offset value based on a plurality of the measurement data stored in the storage; updating an offset value which has been already set to the offset value which is calculated; and correcting the measurement data according to the updated offset value and computing the azimuth data.

Further the invention proposes an azimuth data computing method comprising the steps of: sequentially measuring a magnetic field detected by a geomagnetic sensor to provide measurement data; storing the measurement data in a storage; when a number of the measurement data stored in the storage reaches a predetermined number and when new measurement data is provided, detecting one of the stored measurement data having a direction closest to the direction of the new measurement data, and replacing the detected measurement data by the new measurement data; calculating an offset value based on a plurality of the measurement data stored in the storage; updating an offset value which has been previously set to a new offset value which is newly calculated; and correcting the measurement data according to the updated offset value and computing azimuth data.

Further the invention proposes a compass sensor unit comprising: a magnetic field measuring means that inputs data from a geomagnetic sensor to measure magnetic field data; a data storing determining means that determines whether to store current magnetic field data based on a distance between the current magnetic field data and previous magnetic field data stored immediately before; an offset calculating means that calculates an offset value based on the stored magnetic field data; an offset validity judging means that compares a plurality of the magnetic field data used for the calculating of the offset value with one anther for each component, and that judges the calculated offset value to be valid when a difference between a maximum value and a minimum value for each component of the stored magnetic field data is greater than a predetermined threshold value; a data storing determination redoing means operative when the valid offset value is greater than a predetermined critical value for again determining whether to store the magnetic field data while removing the valid offset value from each stored magnetic field data; an updating means operative when the valid offset value is smaller than the predetermined critical value for updating an already stored offset value according to the valid offset value currently judged to be valid; and a computing means that corrects the measured magnetic field data by the updated offset value to compute azimuth data.

Further the invention proposes a compass sensor unit comprising: a magnetic field data measuring means that sequentially measures a magnetic field detected by a geomagnetic sensor, thereby successively providing measurement data; a determining means that determines whether to store current measurement data in a storage based on distances between the current measurement data and a plurality of previous measurement data already stored in the storage; a storing means that sequentially stores the measurement data in the storage when the measurement data is determined to be stored; an offset value calculating means that calculates an offset value based on the plurality of the measurement data stored in the storage; an updating means that updates an old offset value which has been already set to the offset value which is calculated; and a computing means that corrects the measurement data by the updated offset value to compute azimuth data.

Further the invention proposes a compass sensor unit comprising: a measuring means that successively measures a magnetic field detected by a geomagnetic sensor to provide measurement data in response to a request from an application program which uses azimuth data; a storing means that sequentially stores the measurement data; a control means that erases the oldest one of the stored measurement data from the storage when a number of the stored measurement data reaches a predetermined number while storing new one of the measurement data in the storage; a calculating means that calculates an offset value based on a plurality of the measurement data stored in the storage; an updating means that updates an offset value which has been already set to the offset value which is calculated; and a computing means that corrects the measurement data by the updated offset value to compute the azimuth data.

Further the invention proposes a compass sensor unit comprising: a measuring means that successively measures a magnetic field detected by a geomagnetic sensor to provide measurement data; a storing means that stores the measurement data in a storage; a control means that operates when a number of the measurement data stored in the storage reaches a predetermined number for storing new measurement data by replacing one of the stored measurement data having a direction closest to the direction of the new measurement data; a calculating means that calculates an offset value based on a plurality of the measurement data stored in the storage; an updating means that updates an offset value which has been already set to the offset value which is calculated; and a computing means that corrects the measurement data by the updated offset value to compute azimuth data.

Advantage of the Invention

According to the invention, there is provided an advantage of properly and accurately carrying out calibration of the geomagnetic sensor without imposing cumbersome operation. Further, there is another advantage of properly and accurately carrying out calibration of the geomagnetic sensor while reducing excessive work load associated to the computation of the offset.

BRIEF DESCRIPTION OF THE DRAWINGS

Fig. 1 is a block diagram showing the structure of a portable electronic device (portable terminal) according to the present invention.
Fig. 2 is a block diagram showing the structure of a compass sensor unit according to a first embodiment.
Fig. 3 is a flowchart related to output of azimuth data according to the first embodiment.
Fig. 4 is a block diagram showing the structure of a modification example of the compass sensor unit according to the first embodiment.
Fig. 5 is a block diagram showing the structure of a compass sensor unit according to a second embodiment.
Fig. 6 is a flowchart related to output of azimuth data according to the second embodiment.
Fig. 7 is a block diagram showing the structure of a modification example of the compass sensor unit according to the second embodiment.
Fig. 8 is a block diagram showing the structure of a compass sensor unit according to a third embodiment.
Fig. 9 is a flowchart related to output of azimuth data according to the third embodiment.
Fig. 10 is a block diagram showing the structure of a compass sensor chip according to a fourth embodiment.
Fig. 11 is a block diagram showing the structure of a compass sensor unit according to the fourth embodiment.
Fig. 12 is a block diagram showing the structure of a modification example of the compass sensor unit according to the fourth embodiment.
Fig. 13A is an illustration showing the coordinate system allocated to a portable terminal.

Fig. 13B is an illustration showing a ground coordinate system.

DESCRIPTION OF REFERENCE NUMERALS

| | |
|---|---|
| 1 | portable terminal |
| 101, 106 | antenna |
| 102 | RF part |
| 103 | modem part |
| 104 | CDMA part |
| 105 | speech processing part |
| 107 | GPS receiver part |
| 108 | main control part |
| 109 | ROM |
| 110 | RAM |
| 111 | annunciator means |
| 112 | timer part |
| 113 | main operating part |
| 114 | SW . |
| 116 | electronic image pickup part |
| 117 | display part |
| 118 | touch panel |
| 115 | auxiliary operating part |
| 200 | compass sensor unit |
| 201 | measurement data storing means |
| 202 | measurement data storing determining means |
| 203 | offset calculating means |
| 204 | offset validity judging means |
| 205 | offset storing means |
| 206 | offset setting means |
| 207 | azimuth measuring means |
| 208 | offset magnitude determining means |
| 300 | sensor chip |
| 301 | magnetic sensor part |
| 302 | switching means |
| 303 | amplifier |
| 304 | adder |
| 305 | D/A converter |
| 306 | offset memory part |
| 307 | A/D converter |
| 308 | overflow/underflow detection part |
| 310 | temperature sensor |
| 311 | tilt sensor |
| 312 | switching means |

BEST MODE FOR CARRYING OUT THE INVETNION

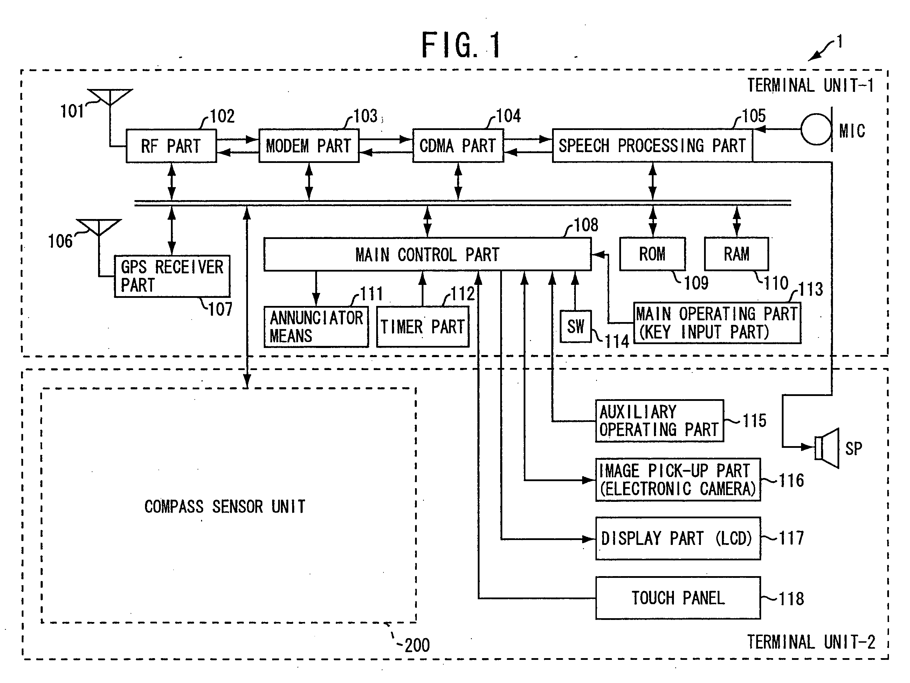

Embodiments of the present invention will now be described with reference to the accompanying drawings. Fig. 1 is a block diagram showing the electrical structure of a portable electronic device according to a preferred form of the present invention by taking an example a CDMA (Code Division Multiple Access) portable communication terminal (hereinafter called the portable terminal):
Portions common to one another in the drawings are given the same reference numerals.
As shown in Fig. 1, a portable terminal 1 of this form includes antennas 101 and 106, an RF part 102, a modem part 103, a CDMA part 104, a speech processing part 105, a GPS receiver part 107, a main control part 108, a ROM 109, a RAM 110, annunciator means 111, a timer part 112, a main operating part 113, an SW 114, an electronic image pickup part 116, a display part 117, a touch panel 118, an auxiliary operating part 115, and a compass sensor unit 200.
As shown in Fig. 1, the antenna 101 exchanges radio waves with a radio base station, not shown. The RF part 102 performs processing related to sending and receiving signals. The RF part 102 is equipped with a local oscillator and the like. Upon reception, the RF part 102 mixes a local oscillator signal of a given frequency with a received signal from the antenna 101 to convert the received signal to a received IF signal of an intermediate frequency (IF), and output it to the modem part 103. Upon transmission, the RF part 102 mixes a local oscillator signal of a given frequency with a transmit IF signal of an intermediate frequency to convert the transmit IF signal to a transmit signal of a transmit frequency, and output it to the antenna 101.

The modem part 103 demodulates the received signal and modulates the transmit signal. The modem part 103 is equipped with a local oscillator and the like to convert the received IF signal from the RF part 102 into a baseband signal of a given frequency, convert the baseband signal to a digital signal and output the digital signal to the CDMA part 104. On the other hand, the modem part 103 converts a digital baseband signal from the CDMA part 104 into a transmit analog signal, converts it to a transmit IF signal of a given frequency, and outputs it to the RF part 102.

The CDMA part 104 encodes the transmit signal and decode the received signal. The CDMA part 104 decodes the baseband signal output from the modem part 103. On the other hand, the CDMA part 104 encodes the transmit signal and outputs the coded baseband signal to the modem part 103.

The speech processing part 105 performs speech processing during a call. The speech processing part 105 converts an analog speech signal output from the microphone (MIC) during the call, and outputs it to the CDMA part 104 as a transmit signal. On the other hand, the speech processing part 105 generates an analog driving signal for driving a speaker (SP) based on a signal representing speech data decoded during the call by the CDMA part 104, and outputs it to the speaker (SP). The microphone (MIC) generates a speech signal based on voice input by the user, and outputs it to the speech processing part 105. The speaker (SP) sounds the voice of a calling partner based on a signal output from the speech processing part 105.

The GPS antenna 106 receives radio waves transmitted from GPS satellites, not shown, and outputs received signals based on the radio waves to the GPS receiver part 107. The GPS receiver part 107 demodulates the received signals, and acquires information based on the received information, such as accurate time information and propagation time from each of the GPS satellites. The GPS receiver part 107 calculates distances to three or more GPS satellites based on the acquired information to calculate a position in three-dimensional space (latitude, longitude, altitude, etc) based on the triangulation principle.

The main control part 108 includes a CPU (Central Processing Unit) and the like to control each internal part of the portable terminal 1. The main control part 108 inputs and outputs control signals or data through a bus to and from the RF part 102, the modem part 103, the CDMA part 104, the speech processing part 105, the GPS receiver part 107, the compass sensor unit 200 to be described below, the ROM 109, and the RAM 110. The ROM 109 stores various programs to be executed by the main control part 108, and initial characteristic values and the like of a temperature sensor and a tilt sensor measured at the time of shipping inspection. The RAM 110 temporarily stores data and the like to be processed by the main control part 108.

The annunciator means 111 includes, for example, a speaker, a vibrator, and/or a light-emitting diode to inform the user of the arrival of a call or e-mail using sound, vibration, and/or light. The timer part 112 has a timer function for creating time information indicating year, month, day, day of the week, time, etc. The main operating part 113 includes input keys for entering characters, a conversion key for conversion to Chinese characters, numerals, etc., cursor keys, a power on/off key, a talk key, a redial key, etc. operated by the user; it outputs signals indicating the operation results to the main control part 108. The opening/closing switch (SW) 114 is a switch for detecting the beginning of opening or end of closing of a folding portable terminal.

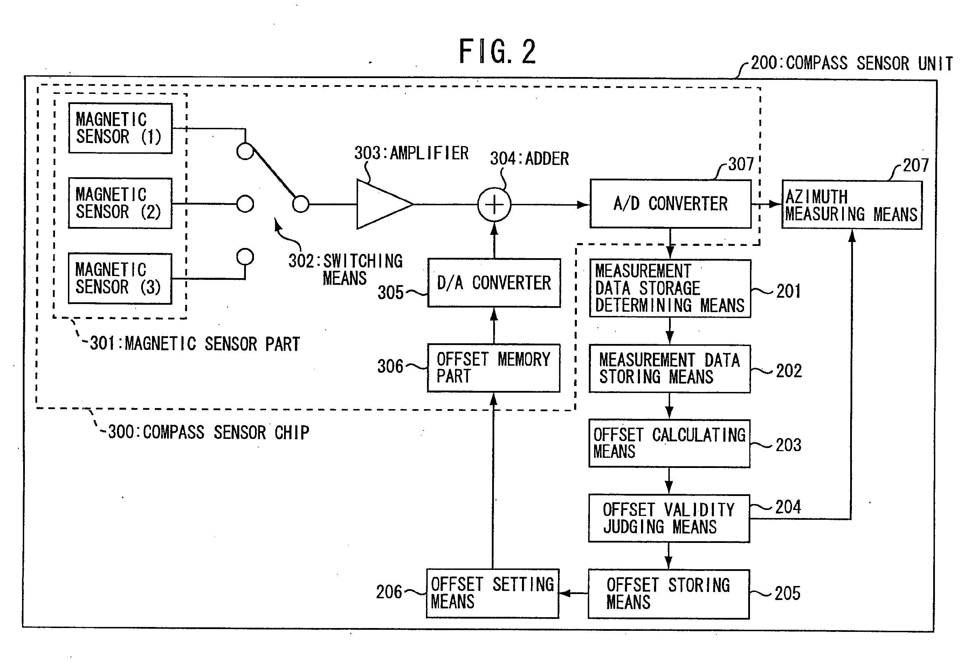

The compass sensor unit 200 includes magnetic sensors (1) to (3) for detecting x-axis, y-axis, and z-axis magnetic fields orthogonal to one another, a temperature sensor for detecting temperature, a physical-value sensor for detecting the inclination, or tilt angle, of the portable terminal 1, and a processing block for processing the detection results from the respective sensors. The details will be described later using Fig. 2.

The electronic image pickup part 116 includes an optical lens and an image pickup device such as a CCD (Charge Coupled Device). The image pickup device converts, into an analog signal, an image of a subject formed through the optical lens on an image pickup plane of the image pickup device, converts the analog signal to a digital signal, and outputs it to the main control part 108. The display part 117 includes a liquid crystal display or the like on which images or characters are displayed based on display signals output from the main control part 108. The touch panel 118 is incorporated on the surface of the liquid crystal display included in the display part 117 to output, to the main control part 108, a signal corresponding to a user's operation. The auxiliary operating part 115 includes a push switch and the like used for display switching.

A first embodiment will next be described using Figs. 2 to 4.
As shown in Fig. 2, the compass sensor unit according to the embodiment includes measurement data storage determining means 201, measurement data storing means 202, offset calculating means 203, offset validity judging means 204, offset storing means 205, offset setting means 206, azimuth measuring means 207, and a compass sensor chip 300. The compass sensor chip 300 further includes a magnetic sensor part 301, a switching means 302, an amplifier 303, an adder 304, a D/A converter 305, an offset memory part 306, and an A/D converter 307.

Upon calibration, the measurement data storage determining means 201 performs processing related to data storage such as to determine whether to store measurement data, indicated by a digital signal corresponding to the output of a magnetic sensor, into the measurement data storing means 202. Here, the calibration means the steps of measuring an external magnetic field, computing an offset value based on the obtained measurement data, and updating (setting) the computed offset value as an offset of the geomagnetic sensor. The measurement data storing means 202 captures data from the measurement data storage determining means 201 to store the data by a predetermined storage method (the details will be described later).

The offset calculating means 203 calculates offset based on the measurement data acquired during the calibration (the details will be described later). The offset validity judging means 204 judges the validity of the offset calculated by the offset calculating means 203 (the details will be described later).

The offset storing means 205 updates the previously stored offset value to the offset value judged to be valid by the offset validity judging means 204 in case that the offset value is previously stored. The offset setting means 206 sums up the offset value stored in the offset memory part 306 and the offset value output from the offset storing means 205 to output the total value to the offset memory part 306. The azimuth measuring means 207 measures an azimuth direction from the measurement data input from the A/D converter 307 to be described later.

It is conceivable in general that the offset of a magnetic sensor includes offset unique to the magnetic sensor, offset influenced by peripheral circuits, and offset caused by the turbulence of the magnetic field under the influence of the other parts. Among them, the offset unique to the magnetic sensor and the offset influenced by the peripheral circuits take relatively constant values. Therefore, these values may be measured beforehand and prestored in the offset setting means 206.

The magnetic sensor part 301 includes magnetic sensors (1) to (3), and sensor initialization means (1) to (3), not shown, for initializing each magnetic sensor after power-on. When a ferromagnetic field is applied, the direction of the magnetization of each magnetic body of the magnetic sensors is changed or distorted. To avoid this, the sensor initialization means (1) to (3) are provided to reset each of the magnetic sensors (1) to (3) to its initial state.

The switching means 302 switches among the magnetic sensors (1) to (3) of the magnetic sensor part 301 to input each of magnetic field data sequentially from-the magnetic sensors (1) to (3) to the amplifier 303. The adder 304 subtracts from the output of the amplifier 303, an analog signal D/A converted by the D/A converter 305 from the offset value corresponding to each of the magnetic sensors (1) to (3). The A/D converter 307 converts the output of the adder 304 to a digital signal, and outputs it to the azimuth measuring means 207. By the way, the adder 304 may be disposed in a preceding stage of the amplifier 303, and may perform a subtraction process for the magnetic field data from the switching means 302 before amplification. In this case, it is necessary that the signal to subtract is an offset value corresponding to the magnetic field data before amplification.

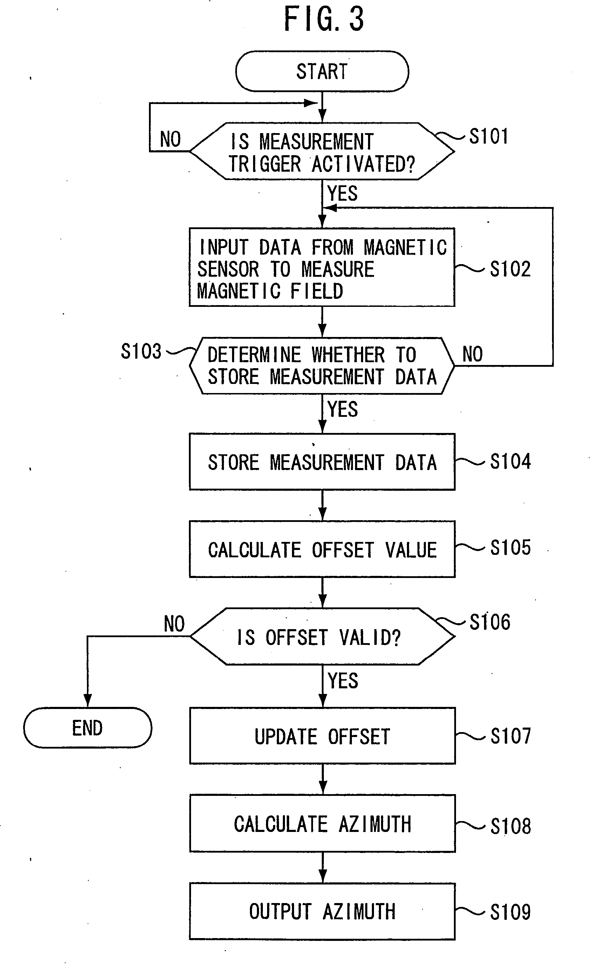

Next, specific processing will be described using Fig. 3.

As shown in Fig. 3, for example, when an application program (such as navigation software using the azimuth data) is activated, the compass sensor unit 200 is triggered to perform measurement (step 101) in response to a request from the application program. Specifically, it is considered that the trigger is activated at constant intervals. There are other possible triggering methods, such as to trigger in response to an azimuth measuring request from the application program side, and to trigger when it is conceivable that the azimuth direction could have changed as a result of monitoring another device in the portable terminal (for example, at the time when image data input in the electronic image pickup part 116 has slid).

The method of triggering at constant intervals performs data measurement periodically. Therefore, this method has the advantage of short response time because previously measured data have only to be output whenever the application program makes a request to measure azimuth. The method of triggering in response to an azimuth measuring request from the application program can minimize the number of measurements. Therefore, this method has the advantage of reducing wasteful power consumption. The method of triggering according to the state of another device has the combined advantages of both methods though it is a necessary condition that another device in the portable terminal is operating.

When the measurement trigger is activated, magnetic field is measured from data input from the magnetic sensor part 301, converted to digital measurement data, and output to the measurement data storage determining means 201 and the azimuth measuring means 207 (step 102). The measurement data storage determining means 201 performs processing for determining whether to store the data into the measurement data storing means 202 (step 103).

The measurement data storage determining means 201 refers to data stored in the measurement data storing means 202 to determine whether to store the input data into the measurement data storing means 202 based on a determination method to be described later. When determining that the input data should be stored, the data is stored in the measurement data storing means 202.

The judging and storing methods include (1) method of storing all data; and (2) method of judging presence or absence of data stored in the measurement data storing means 202 and storing only the data is absent. These methods are advantageous in avoiding the data-from concentrating in a part of the azimuth sphere. Further the methods of judging whether to store the data and storing data in case that the data are already present include (3) the method of judging whether a distance to the last stored data is greater than a predetermined value and storing only if the distance is greater. Note that the distance between measurement data (Hx1, Hy1, Hz1) and (Hx2, Hy2, Hz2) is expressed by Equation 1

$$[\text{Equation 1}]$$
$$\sqrt{(Hx1 - Hx2)^2 + (Hy1 - Hy2)^2 + (Hz1 - Hz2)^2}.$$

Further, there is (4) method of storing the data only if the data is distant from all of the stored data on the coordinates over a predetermined value. The methods (3) and (4) can prevent the data from concentrating in a part of the azimuth sphere. The uniformity of the data is excellent although the time is required to accumulate the data. Note that a suitable value for the given distance is about 3.98 [A/M].

The measurement data storing means 202 captures the data from the measurement data storage determining means 201, stores it based on a storage method to be described later (step 104), and inquires of offset calculation triggering means, not shown, as to whether the data should be output to the offset calculating means 203. The offset calculation triggering means replies as to whether the data should be output to the offset calculating means 203 based on a triggering method of offset calculation to be described later. When receiving an instruction to output data to the offset calculating means 203, the measurement data storing means 202 outputs the stored data to the offset calculating means 203.

Here the data storing methods include (1) accumulating data in the order of receipt, erasing all data when the offset computation process is finished with triggering of the offset computation triggering means, and once again accumulating the data from the beginning. There are methods: (2) accumulating data in the order of receipt, and erasing the oldest data when receiving new data after a predetermined amount of data are accumulated, thereby holding a constant amount of fresh data; (3) accumulating data in the order of receipt and erasing a part of old data to restart data accumulation when the offset computation process is finished by triggering of the offset computation triggering means; and (4) accumulating data in the order or their values, and storing new data by replacing data which is located in the closest direction to the new data after a predetermined amount of data are accumulated. The method (1) is advantageous in that the process load is light. The method (2) is advantageous in raising frequency of calibration and correcting the offset in the shortest period, the method (3) is capable of correcting the offset in a short period while causing a problem of increasing the computation load of calibration. However, this method (3) is advantageous in that the computation frequency of offset is made low and the load of computation process is reduced as compared to the previous method (2). The method (4) can keep the density of the data uniform , while unnecessary data remains long time in case that the variation of offset is greater than the azimuth sphere.

Further there is another method of accumulating data in the order of their values, and storing new data by replacing data which is located in the closest direction to the new data after a predetermined amount of data are accumulated. In this case, this method is advantageous as compared to the previous methods in that the data density is kept uniform when the scale of the variation of the offset is small, while this method has drawbacks that unnecessary data may remain long time when the scale of the variation of the offset is greater than a radius of the azimuth sphere. The azimuth sphere is a sphere having a center corresponding to an offset of the magnetic sensor in the azimuth space and has a radius corresponding to a magnitude of the geomagnetism.

Further, triggering methods of offset computation may include: (1) triggering when the data reaches to a predetermined amount; (2) triggering when the data reaches to a predetermined amount and a predetermined time has passed from a previous offset computation; (3) triggering at a predetermined period when four or more data exist. The method (1) is advantageous in that the accuracy is maintained since the number of data is constant. The method (2) is capable of carrying out the calibration in a short time and correct the offset in a short time. The method (3) can avoid a situation that the calibration is not carried out for a long lasting period.

Then, when the measurement data is supplied from the measurement data storing means 202 to the offset calculating means 203, offset is calculated based on these pieces of measurement data (step 105).

The following describes an offset calculation algorithm.

If the measurement data is expressed by $(x_i, y_i, z_i)$ where $I = 1, ..., N$, the offset is (X0, Y0, Z0), and the radius of the compass sphere is R, the following equation is given:

$$(x_i - X0)^2 + (y_i - Y0)^2 + (z_i - Z0)^2 = R^2.$$

In this case, the least square error $\varepsilon$ is defined as follows:
[Equation 2]

$$\varepsilon = \sum \left\{ (x_i - X0)^2 + (y_i - Y0)^2 + (z_i - Z0)^2 - R^2 \right\}^2$$
$$= \sum \left\{ (x_i^2 + y_i^2 + z_i^2) - 2x_i X0 - 2y_i Y0 - 2z_i Z0 + (X0^2 + Y0^2 + Z0^2) - R^2 \right\}^2$$

If $a = x_i^2 + y_i^2 + z_i^2$,
$b = -2x_i$,
$c = -2y_i$,
$d = -2z_i$, and

$$D = (X0^2 + Y0^2 + Z0^2) - R^2 \qquad \dots (1),$$

$\varepsilon$ is determined by the following equation 3:
[Equation 3]

$$\varepsilon = \sum (a_i + b_i X0 + c_i Y0 + d_i Z0 + D)^2 .$$

In order to simplify the computation, the variable D is treated as an independent variable. In this case, requirements for setting the least square error $\varepsilon$ to the minimum are given by differentiating $\varepsilon$ with the variables X0, Y0, Z0, and D as shown in the following equation 4:
[Equation 4]

$$\begin{cases} \dfrac{\partial \varepsilon}{\partial X0} = 2\sum (a_i + b_i X0 + c_i Y0 + d_i Z0 + D) b_i = 0 \\[2mm] \dfrac{\partial \varepsilon}{\partial Y0} = 2\sum (a_i + b_i X0 + c_i Y0 + d_i Z0 + D) c_i = 0 \\[2mm] \dfrac{\partial \varepsilon}{\partial Z0} = 2\sum (a_i + b_i X0 + c_i Y0 + d_i Z0 + D) d_i = 0 \\[2mm] \dfrac{\partial \varepsilon}{\partial D} = 2\sum (a_i + b_i X0 + c_i Y0 + d_i Z0 + D) = 0 \end{cases}$$

As a result, the following equation 5 is given:
[Equation 5]

$$\begin{bmatrix} [bb] & [bc] & [dd] & [b] \\ [bc] & [cc] & [cd] & [c] \\ [bd] & [cd] & [dd] & [d] \\ [b] & [c] & [d] & N \end{bmatrix}\begin{bmatrix} X0 \\ Y0 \\ Z0 \\ D \end{bmatrix} = \begin{bmatrix} -[ab] \\ -[ac] \\ -[ad] \\ -[a] \end{bmatrix}$$

where [m] is represented by equation 6:
[Equation 6]

$$[m] = \sum_{i=1}^{N} m_i \; .$$

By solving the above-mentioned simultaneous equations, there are obtained X0, Y0, ZO, D, which take the least square error as the minimum value. Further, R is determined from (1).

After the offset value is calculated, the offset validity judging means 204 judges the validity of the offset value (step 106). Specifically, the following values of Equation 7 are determined from the calculated offset, the radius of the compass circle (sphere), and measurement data stored in the measurement data storing means 202:

[Equation 7]

$$\sigma = \frac{1}{R}\sqrt{\frac{N\sum_{i=1}^{N}\left\{(x_i - X0)^2 + (y_i - Y0)^2 + (z_i - Z0)^2\right\} - \left(\sum_{i=1}^{N}\sqrt{(x_i - X0)^2 + (y_i - Y0)^2 + (z_i - Z0)^2}\right)^2}{N^2}}$$

$$w_x = \frac{Max(x_i) - Min(x_i)}{R}$$

$$w_y = \frac{Max(y_i) - Min(y_i)}{R}$$

$$w_z = \frac{Max(z_i) - Min(z_i)}{R}$$

where $Max(x_i)$ represents the maximum value of measurement data $x_1$, ..., $x_N$, and $Min(x_i)$ represents the minimum value of measurement data $x_1$, ..., $x_N$. Further, $\sigma$ is a standard deviation. The above values are checked as to whether each of the above values meets the following criteria represented by Equation 8, respectively, and only when it meets each criterion, each estimated offset is judged to be valid, where F is preferably about 0.1, and G is about 1.

[Equation 8]

$$\sigma < F$$

$$w_x > G$$

$$w_y > G$$

$$w_z > G$$

Then, when the offset value is judged to be valid, the offset value stored in storage means, not shown, in the azimuth measuring means 207 is updated (step 107). The azimuth measuring means 207 operates based on the newly updated offset value in the storing means for removing the offset from the input measurement data, and calculates an azimuth direction by any of the following methods (step 108).

1) For example, assuming that the portable terminal is on the horizontal plane, the azimuth direction is determined based on the following:

If $Abs(Hx)<Abs(Hy)$ and $Hy>0$, then direction(deg)=-arctan $(Hx/Hy)*180/\pi$,
If $Abs(Hx)<Abs(Hy)$ and $Hy<0$, then direction(deg) =180-arctan$(Hx/Hy)*180/\pi$,
If $Abs(Hx)>Abs(Hy)$ and $Hx>0$, then direction(deg) =90+arctan$(Hx/Hy)*180/\pi$,
If $Abs(Hx)>Abs(Hy)$ and $Hx<0$, then direction(deg) =270+arctan$(Hx/Hy)*180/\pi$.

2) Assuming that the portable terminal is tilted at an angle a (rad), the azimuth direction is determined based on the following:

when $Hy'=Hycos(a)-Hz'sin(a)$,
if $Abs(Hx)<Abs(Hy')$ and $Hy>0$, then direction(deg)=-arctan$(Hx/Hy')*180/\pi$,
if $Abs(Hx)<Abs(Hy')$ and $Hy<0$, then direction(deg) =180-arctan$(Hx/Hy')^*180/7c$,
if $Abs(Hx)>Abs(Hy')$ and $Hx>0$, then direction(deg) =90+arctan$(Hx/Hy')*180/\pi$,
if $Abs(Hx)>Abs(Hy')$ and $Hx<0$, then direction(deg) =270+arctan$(Hx/Hy')*180/\pi$.

In the above equations, Hx, Hy, and Hz are the outputs of the magnetic sensors, respectively, the azimuth direction points along the y axis, and the magnetic north is zero degree.

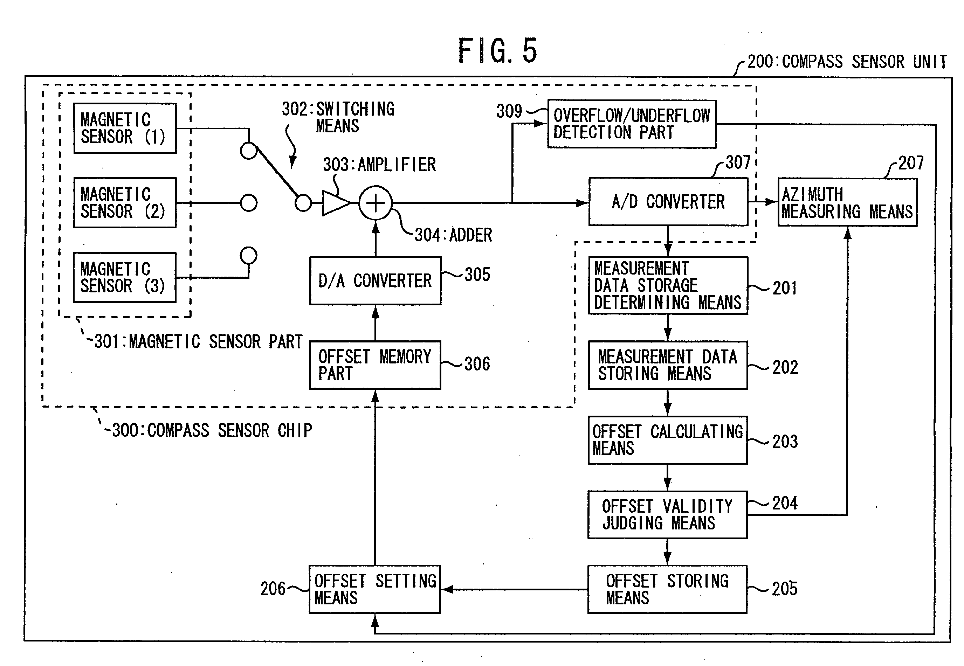

Since it is relatively easy for the user to keep the portable terminal in a horizontal position, the method 1) has the advantage of being easy to obtain azimuth accurately. On the other hand, since the method 2) determines the azimuth direction in such a condition that the portable terminal is tilted in a range of angles at which the user usually holds it, a roughly correct azimuth direction can be determined. However, it may be difficult to head the portable terminal in a steady direction, so that accuracy cannot be expected so much.
The azimuth data thus obtained is output, for example, to the display part 117 or the like, and displayed on it (step 109).

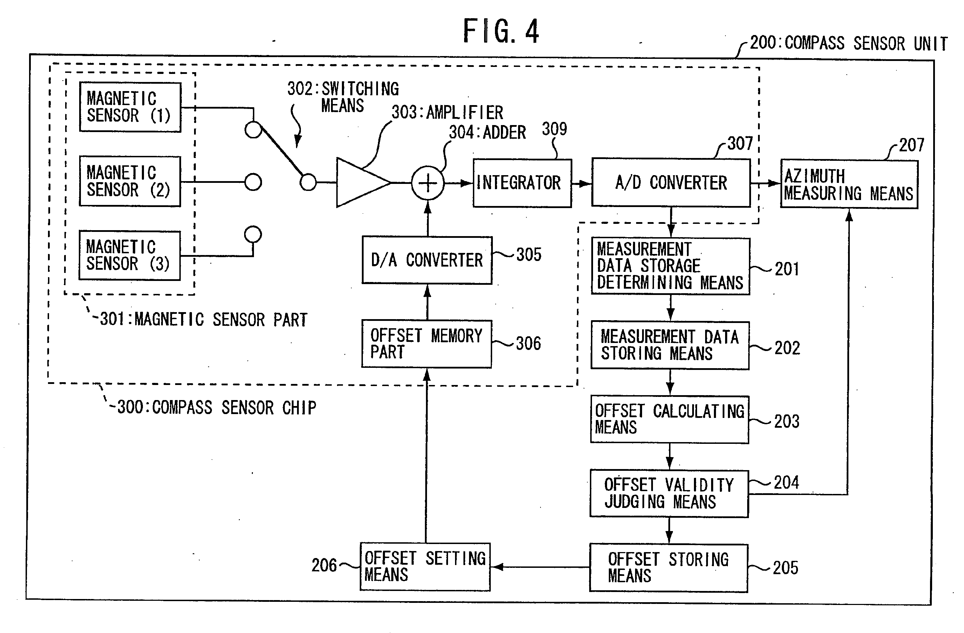

Fig. 4 shows a modification example of the embodiment, in which an integrator 309 is provided to the output of the adder 304. The integrator 309 is provided to average minute variations of measurement data in calculation of analog values, so that the accuracy of measurements can be improved. This modification structure is applicable to other embodiments to be described later.
A second embodiment will next be described using Figs. 5 to 7.
As shown in Fig. 5, a compass sensor unit according to the second embodiment includes an overflow/underflow detection part 308 for monitoring the output of the amplifier 303 in addition to the structure of the first embodiment.
The overflow/underflow detection part 308 detects whether the output of the amplifier 303 falls within an input range of the next stage A/D converter 307. When overflow or underflow occurs, a value based on detection results of the overflow/underflow detection part 308 is input into offset setting means 206 so that the output of the amplifier 303 will fall within the input range of the next stage A/D converter 307. The offset setting means 206 operates when the offset storing means 205 has previously stored offset value for summing up the value inputted from the overflow/underflow detection part 308 and the value previously stored in the offset storing means 205 with each other, to thereby set an offset value to be stored in the offset memory part 306.

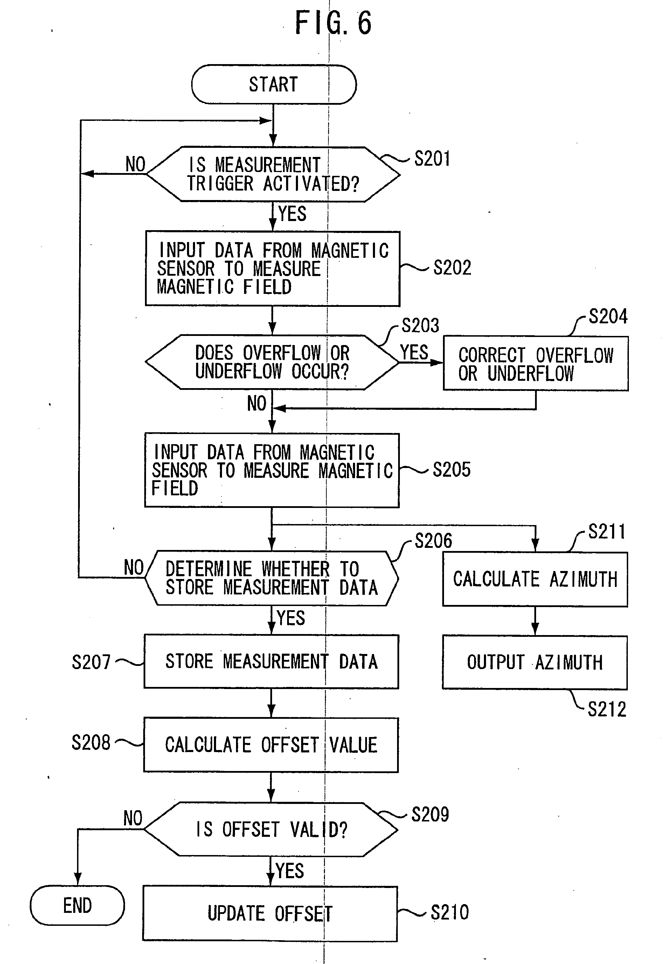

Next, specific processing will be described using Fig. 6.

As shown in Fig. 6, for example, when an application program or the like requiring azimuth measurement is activated, the compass sensor unit 200 is triggered to perform measurement in the same manner as in the first embodiment (step 201). When the measurement trigger is activated, magnetic field data is first measured from data input from the magnetic sensor part 301, and then the measured magnetic data is sent to the amplifier 303 (step 202).

After that, the overflow/underflow detection part 308 detects whether the output of the amplifier 303 falls within the input range of the next stage A/D converter 307. When overflow or underflow does occur, a certain value (hereafter, the value based on the detection results of the overflow/underflow detection part 308) is input into the offset setting means 206 so that the output of the amplifier 303 will fall within the input range of the next stage A/D converter 307 by adding the value to the output of the amplifier 303 (step 204). Then, the procedure goes to the next step (step 203). When overflow or underflow does not occur, the procedure goes to the step 204 with skipping the step 203. Then, magnetic field data remeasured from data input from the magnetic sensor part, converted to digital measurement data, and output to the measurement data storage determining means 201 and the azimuth measuring means 207 (step 205).

The measurement data storage determining means 201 performs processing for determining whether to store the data into the measurement data storing means 202 (step 206). When the measurement data is determined to be stored, it is stored in the measurement data storing means 202 (step 207), while when the measurement data is determined to be not stored, the procedure returns to step 201.

The measurement data storing means 202 captures the data from the measurement data storage determining means 201, stores it based on a storage method described above (step 207), and inquires of offset calculation triggering means, not shown, as to whether the data should be output to the offset calculating means 203. The offset calculation triggering means replies as to whether the data should be output to the offset calculating means 203 based on the above-mentioned triggering method. When the measurement data storing means 202 receives an instruction to output data to the offset calculating means 203, the measurement data storing means 202 outputs the stored data to the offset calculating means 203.

Upon receiving the input of the measurement data from the measurement data storing means 202, the offset calculating means 203 calculates offset according to the above-mentioned offset calculation algorithm (step 208). After the offset value is calculated, the offset validity judging means 204 judges the validity of the offset value (step 209). When the offset is judged to be valid, the offset value stored in storage means, not shown, in the azimuth measuring means 207 is updated (step 210).

On the other hand, the azimuth measuring means 207 operates based on a newly updated offset value in the storing means for removing the offset from the input measurement data, and calculates an azimuth direction (step 211). The azimuth data thus obtained is output, for example, to the display part 117 of the portable terminal, and displayed on it (step 212).

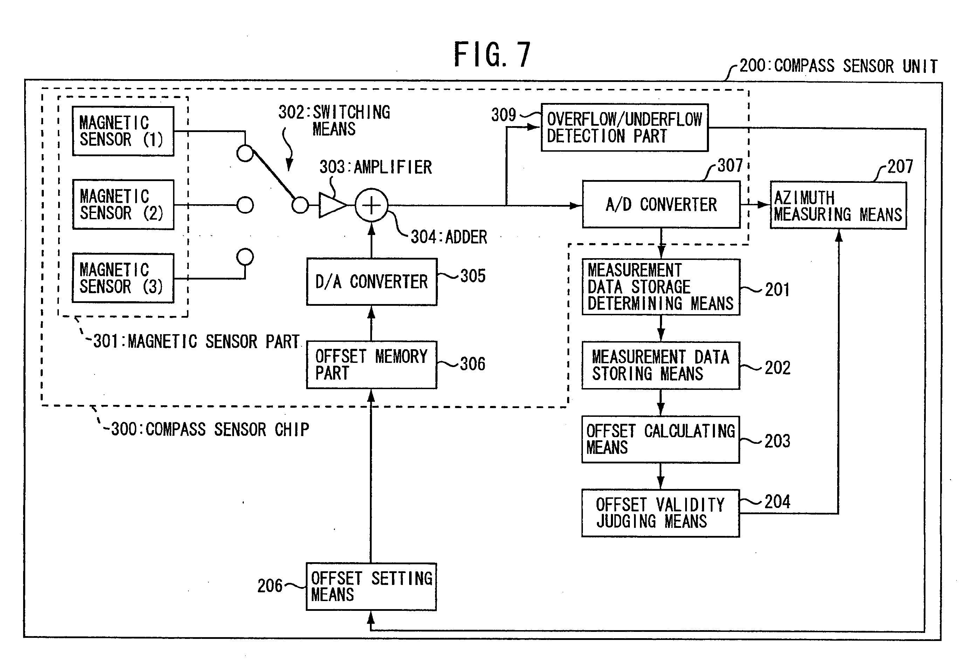

Fig. 7 is a modification example of the second embodiment. The difference from the structure of the second embodiment is that the offset storing means 205 is eliminated. Namely, the offset setting means 206 makes a correction to compensate for overflow or underflow, and the offset of the measurement data that is within the input range of the A/D converter 307 is corrected based on the offset value calculated by the offset calculating means 203. By such a structure, an overflow/underflow correction is made primarily through hardware processing, while a correction after elimination of overflow or underflow is made primarily through software processing. This makes it possible to reduce not only the circuit load but also the software processing load.

According to the embodiment, the overflow/underflow detection part detects overflow or underflow. When the overflow or underflow is detected, the adder 304 corrects the measurement data based on the value of the overflow/underflow detection. This makes it possible to reduce time required for A/D conversion by the A/D converter 307, and hence to calculate an accurate azimuth direction in a short time. Further, if consideration is given to the circuit structure which separates the correction for restricting within the range and correction of the offset, the circuit load and the software processing load can be reduced as well.

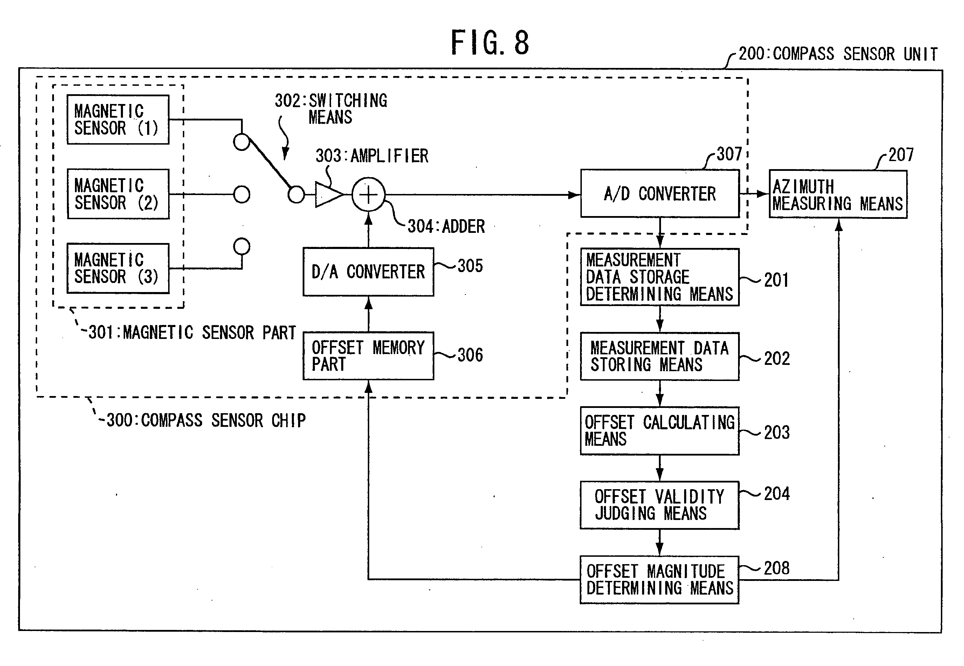

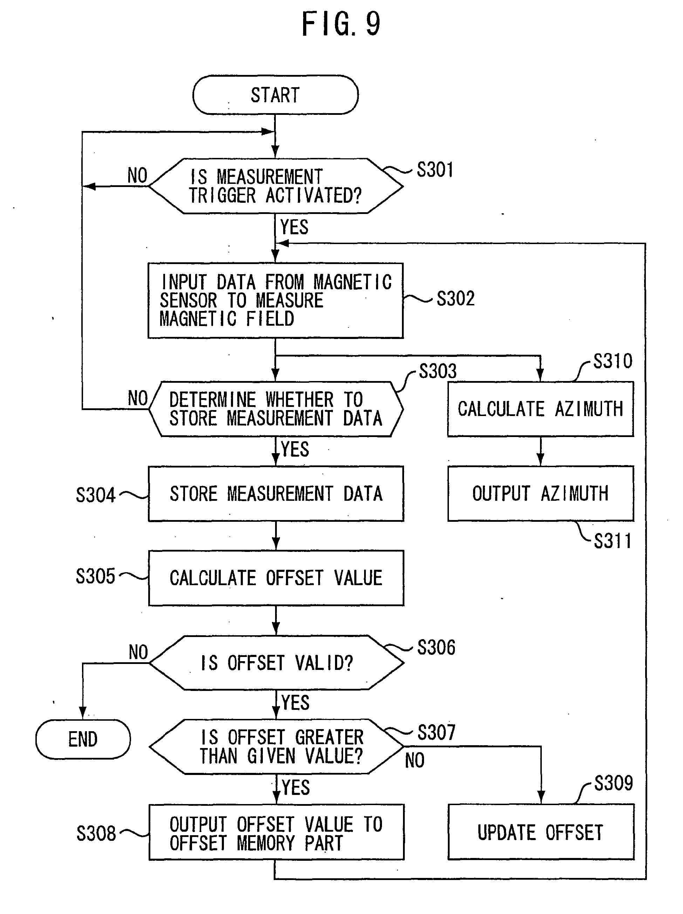

A third embodiment will next be described using Figs. 8 and 9.

As shown in Fig. 8, a compass sensor unit according to the third embodiment includes offset magnitude determining means 208 and excludes the offset setting means 206 and the offset storing means 205 from the structure of the first embodiment.

The offset magnitude determining means 208 determines whether the offset value judged to be valid is lager than a given value. When the offset value is larger than the given value, it is output to the offset memory part 306, while when the offset value is smaller than the given value, it is output to the azimuth measuring means 207.

Next, specific processing will be described using Fig. 9.

As shown in Fig. 9, for example, when an application program or the like requiring azimuth measurement is activated, the compass sensor unit 200 is triggered to perform measurement (step 301) in the same manner as in the first embodiment. When the measurement trigger is activated, magnetic field is measured from data input from the magnetic sensor part 301, converted to digital measurement data, and output to the measurement data storage determining means 201 and the azimuth measuring means 207 (step 302).

The measurement data storage determining means 201 performs processing for determining whether to store the data in the measurement data storing means 202 (step 303). When the measurement data is determined to be stored, it is stored in the measurement data storing means 202 (step 304), while when it is determined to be not stored, the procedure returns to step 301.

The measurement data storing means 202 captures the data from the measurement data storage determining means 201, stores it based on a storage method as described before (step 304), and inquires of offset calculation triggering means, not shown, as to whether the data should be output to the offset calculating means 203. The offset calculation triggering means replies as to whether the data should be output to the offset calculating means 203 based on the above-mentioned triggering method. When receiving an instruction to output data to the offset calculating means 203, the measurement data storing means 202 outputs the stored data to the offset calculating means 203.

Upon receiving the input of the measurement data from the measurement data storing means 202, the offset calculating means 203 calculates offset according to the above-mentioned offset calculation algorithm (step 305). After the offset value is calculated, the offset validity judging means 204 judges the validity of the offset value (step 306).

Then, it is determined whether the offset value judged to be valid is larger than the predetermined value (step 307). When the offset value is larger than the predetermined value, it is output to the offset memory part 306 (step 308), while when the offset value is smaller than the predetermined value, it is output to the azimuth measuring means 207. Then, the offset value stored in storage means, not shown, in the azimuth measuring means 207 is updated (step 309).

On the other hand, the azimuth measuring means 207 removes the offset from the input measurement data after step 302, and calculates an azimuth direction based on the data (step 310). The azimuth data thus obtained is output, for example, to the display part 117 of the portable terminal, and displayed on it (step 311).

According to the embodiment, the offset magnitude determining means detects the magnitude of the offset after the offset validity judging means has judged valid. When the detected magnitude is greater than the predetermined reference value, the offset value is outputted to the offset memory part 306. The outputted offset value and the previous offset value in the offset memory part 306 are summed with each other. The summed offset value is converted into an analog signal by the D/A converter 305. The adder 304 subtracts the converted analog signal from the measurement signal. This makes it possible to reduce time required for A/D conversion by the A/D converter 307, and hence to calculate an accurate azimuth direction in a short time. Namely, the magnitude of the offset value is detected after the validity is judged, and in case that the valued is great, the azimuth sensor chip carries out the offset correction without using the azimuth measurement, hence there is no case where the software process is executed with a great offset value, thereby reducing the software processing load.

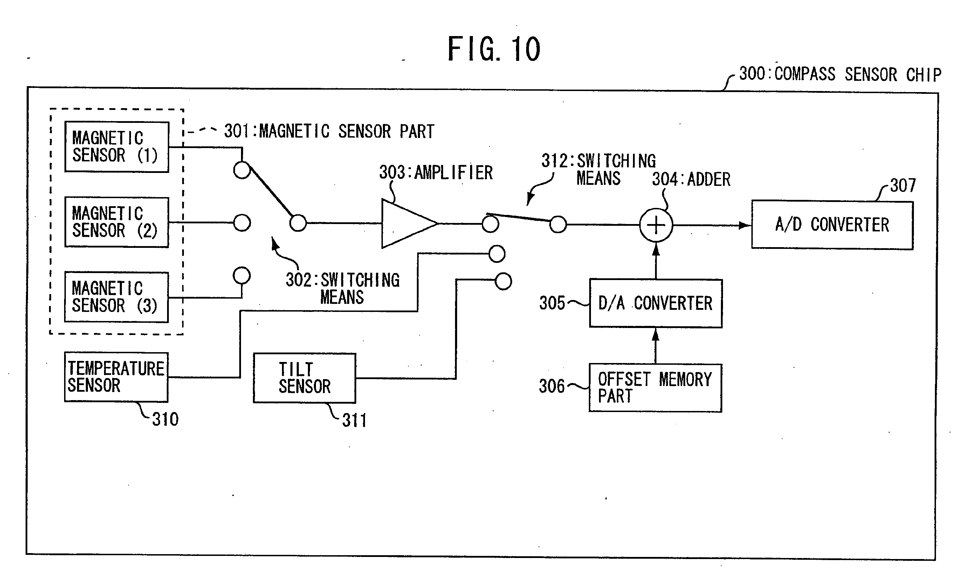

A fourth embodiment will next be described using Figs. 10 to 12.

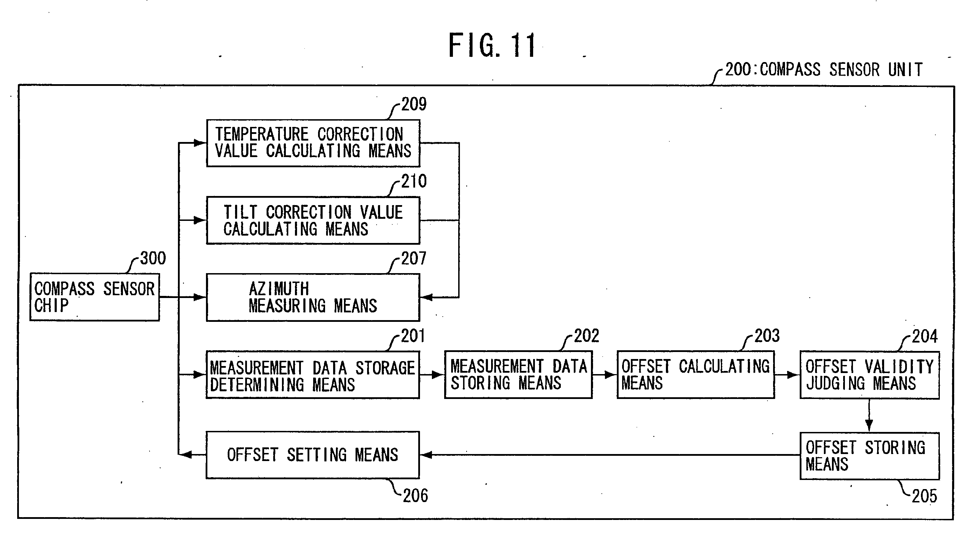

As shown in Fig. 10, a compass sensor chip 300 according to the fourth embodiment further includes, in addition to the components of the first embodiment, a temperature sensor 310, a tilt sensor 311, and switching means 312 for switching among the output of the amplifier 303, the output of the temperature sensor 310, and the output of the tilt sensor 311. In addition, as shown in Fig. 11, the compass sensor unit 200 further includes temperature correction value calculating means 209 and tilt correction value calculating means 210 when the input data is fed from the magnetic sensor part through the A/D converter 307 of the compass sensor chip 300.

The temperature sensor 310 monitors the temperature of the compass sensor chip 300, and outputs the data to the temperature correction value calculating means 209 of the compass sensor unit 200 through the A/D converter 307 of the compass sensor chip 300. The temperature correction value calculating means 209 prestores functions of temperatures and correction values, so that it outputs a correction value corresponding to the input temperature data to the azimuth measuring means 207. Specifically, if temperature upon calibration is TO, estimated offset is OF, a temperature coefficient is A (measured and stored in the ROM 109 at the time of shipping inspection), temperature upon measurement is T, and a value measured by each magnetic sensor is SO, magnetic data S1 after temperature-corrected offset is removed is given by:

$$S1 = S0 - \{OF + A(T - TO)\}.$$

In the above equation, A(T - TO) denotes the correction value for the inputted temperature data.

The tilt sensor 311 monitors the inclination of the compass sensor chip 300, and outputs the data to the tilt correction value calculating means 210 of the compass sensor unit 200 through the A/D converter 307 of the compass sensor chip 300. The tilt correction value calculating means 210 calculates elevation β and skew angle γ by a method to be described below, and outputs them to the azimuth measuring means 207.

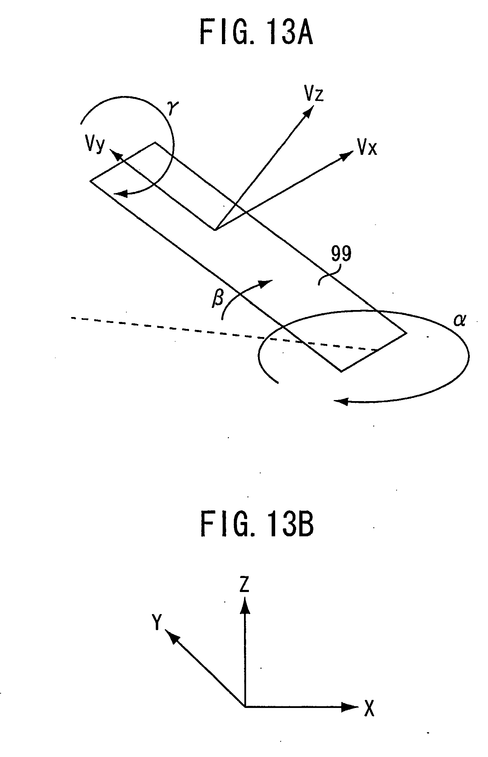

The details of the tilt correction will be described by taking as an example the case of the portable terminal 1. As shown in Fig. 13A, the coordinate system of the portable terminal 1 is first defined. In other words, the azimuth of the antenna 101 of the portable terminal 1 is represented as $\alpha$, the elevation as $\beta$, and the skew angle (rotating angle about the antenna axis) as $\gamma$. These symbols indicate positive in the direction of arrow. Further, a unit vector in the antenna direction is represented as Vy, a unit vector in a direction perpendicular to the surface (e.g., part 99 in Fig. 13) of a terminal unit-2 (the side on which the antenna 101 and the compass sensor ship 300 are arranged) is represented as Vz, and a unit vector orthogonal to both of Vy and Vz is represented as Vx. Note that the direction of arrow of each unit vector is positive. Then, as shown in Fig. 13B, the coordinate system of the ground is represented by X, Y, and Z, with the Y axis heading north.

Here, gravity in the ground coordinate-system is defined as G = (0, 0, Gz). Further, gravity in the portable-terminal coordinate system is defined as g = (gx, gy, gz). It is assumed here that the gravity in the portable-terminal coordinate system can be detected by the tilt sensor. It is needless to say that the gravity in the ground coordinate system is known.

Thus, the gravity g in the portable-terminal coordinate system and the gravity G in the ground coordinate system are represented by the following equation:

$$(Gx, \; Gy, \; Gz) \; BC \; = \; (gx, \; gy, \; gz),$$

where B and C are represented by equations 9 and 10.
[Equation 9]

$$B = \begin{bmatrix} 1 & 0 & 0 \\ 0 & \cos\beta & \sin\beta \\ 0 & -\sin\beta & \cos\beta \end{bmatrix}$$

[Equation 10]

$$C = \begin{bmatrix} \cos\gamma & 0 & -\sin\gamma \\ 0 & 1 & 0 \\ \sin\gamma & 0 & \cos\gamma \end{bmatrix}$$

From these relations, BC is represented by the following equation 11:
[Equation 11]

$$BC = \begin{bmatrix} \cos\gamma & 0 & -\sin\gamma \\ \sin\beta\sin\gamma & \cos\beta & \sin\beta\cos\gamma \\ \cos\beta\sin\gamma & -\sin\beta & \cos\beta\cos\gamma \end{bmatrix}$$

Therefore, the gravity g in the portable-terminal coordinate system is represented by the following equation 12:
[Equation 12]

$$(gx, gy, gz) = (0, 0, Gz) \begin{bmatrix} \cos\gamma & 0 & -\sin\gamma \\ \sin\beta\sin\gamma & \cos\beta & \sin\beta\cos\gamma \\ \cos\beta\sin\gamma & -\sin\beta & \cos\beta\cos\gamma \end{bmatrix}$$

$$= Gz(\cos\beta\sin\gamma, -\sin\beta, \cos\beta\cos\gamma)$$

From this equation, the elevation β and the skew angle γ are determined as following equation 13:
[Equation 13]

$$\beta = \arctan\left( -\frac{gy}{\sqrt{gx^2 + gz^2}} \right)$$

$$\gamma = \begin{cases} \arctan\left(\dfrac{gx}{gz}\right) & gz \geq 0 \\ 180(\deg) + \arctan\left(\dfrac{gx}{gz}\right) & gz < 0 \end{cases}$$

When receiving the elevation P and the skew angle γ, the azimuth measuring means 207 determines the azimuth α and geomagnetic elevation θ according to an algorithm to be described below.
If geomagnetism in the portable-terminal coordinate system is h = (hx, hy, hz) and geomagnetism in the ground coordinate system is H = (0, Hy, Hz), the following equation is given:

(0, Hy, Hz) ABC = (hx, hy, hz),

where A, B and C are represented by the following equation 14.
[Equation 14]

$$A = \begin{bmatrix} \cos\alpha & -\sin\alpha & 0 \\ \sin\alpha & \cos\alpha & 0 \\ 0 & 0 & 1 \end{bmatrix}$$

$$B = \begin{bmatrix} 1 & 0 & 0 \\ 0 & \cos\beta & \sin\beta \\ 0 & -\sin\beta & \cos\beta \end{bmatrix}$$

$$C = \begin{bmatrix} \cos\gamma & 0 & -\sin\gamma \\ 0 & 1 & 0 \\ \sin\gamma & 0 & \cos\gamma \end{bmatrix}$$

From these relations, the following equation 15 is derived:
[Equation 15]

$$(0, Hy, Hz)A = (hx, hy, hz)C^{-1}B^{-1} \equiv (hx', hy', hz')$$

and hence

(hx', hy', hz') = (Hysinα, Hycosα, Hz). Therefore, (hx', hy', hz') can be defined based on the input elevation β, the input skew angle γ, and the measured geomagnetism h in the portable-terminal coordinate system. Here, since the geomagnetism H in the ground coordinate system is known, the azimuth α is determined. The geomagnetic elevation θ is also determined by the following equation16:
[Equation 16]

$$\theta = \arctan\frac{hz'}{\sqrt{hx'^2 + hy'^2}}$$

Thus, according to the embodiment, not only the effect of offset of each magnetic sensor caused by changes in magnetic fields of peripheral parts and the like but also the effect of offset caused by changes in temperature and inclination can be removed effectively.

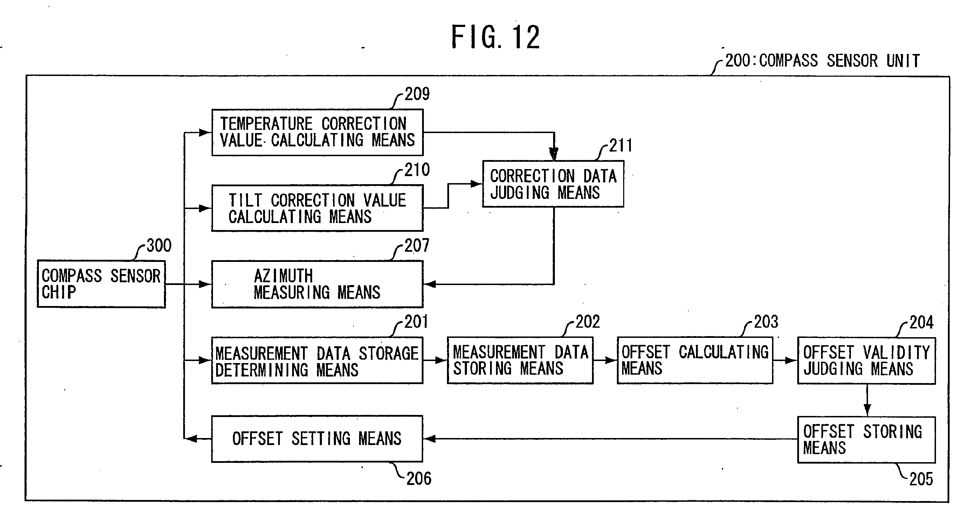

Fig. 12 is a modification example of the embodiment, in which correction data judging means 211 is provided to the outputs of the temperature correction value calculating means 209 and the tilt correction value calculating means 210. The correction data judging means 211 having storage means, not shown, compares output data from each of the temperature correction value calculating means 209 and the tilt correction value calculating means 210 with the last stored output data. Then, when the output data contains a given degree or more change, the data is output to the azimuth measuring means 207.
Thus, according to the embodiment, the correction data judging means 211 judges the data from the temperature correction value calculating means 209 and the tilt correction value calculating means 210 to determine whether to output the data to the azimuth measuring means 207. This can reduce the processing load on the azimuth measuring means 207.

The above describes the embodiments of the present invention with reference to the accompanying drawings, but specific structures are not limited to those of the embodiments, and any other structures can be included without departing from the scope of the invention. For example, the block for calculating the outputs of the magnetic sensors is provided in the compass sensor unit in the embodiments of the present invention, but it is not limited to such an arrangement, and the calculation part may be provided in the main control part of the terminal unit.

Industrial Applicability

The present invention has the advantage of being able to perform calibration without putting an excess load on the user so as to output an accurate direction.

It also has the advantage of providing a compass sensor unit capable of outputting an accurate direction while reducing the loads on the D/A converter and memory.

**Claims**

1. An azimuth data computing method comprising the steps of:

   inputting data from a geomagnetic sensor to measure magnetic field data;
   determining whether measurement data should be stored based on a distance relative to measurement data stored immediately before;
   calculating an offset value based on the stored measurement data;
   comparing a plurality of the measurement data used for calculating the offset value with one anther for each component and judging the calculated offset value to be valid when a difference between a maximum value and a minimum value for each component of the measurement data is greater than a predetermined threshold value;
   updating a previously stored offset value to the offset value judged to be valid; and
   correcting the measurement data according to the updated offset value to compute azimuth data.

2. An azimuth data computing method comprising the steps of:

   inputting data from a geomagnetic sensor to measure magnetic field data;
   determining whether overflow or underflow occurs to the measured magnetic field data for correcting the measured magnetic field data to fall within a predetermined range when it is determined that the overflow or underflow occurs to the measured magnetic field data;
   determining whether to store current measured magnetic field data based on a distance between the current measured magnetic field data and previous measured magnetic field data stored immediately before;
   calculating an offset value based on the stored magnetic field data;
   comparing a plurality of the measured magnetic field data used for the calculating of the offset value with one anther for each component, and judging the calculated offset value to be valid when a difference between a maximum value and a minimum value for each component of the measured magnetic field data is greater than a predetermined threshold value;
   updating an already stored offset value to the offset value judged to be valid; and
   correcting the measured magnetic field data according to the updated offset value to compute azimuth data.

3. An azimuth data computing method comprising the steps of:

   inputting data from a geomagnetic sensor to measure magnetic field data;
   determining whether to store current measured magnetic field data based on a distance between the current measured magnetic field data and previous measured magnetic field data stored immediately before;
   calculating an offset value based on the stored magnetic field data;
   comparing a plurality of the measured magnetic field data used for the calculating of the offset value with one anther for each component, and judging the calculated offset value to be valid when a difference between a maximum value and a minimum value for each component of the measured magnetic field data is greater than a predetermined threshold value;
   when the valid offset value is greater-than a predetermined reference value, returning to the step of determining whether to store the measured magnetic field data while removing the offset value from each measured magnetic field data;

when the valid offset value is smaller than the predetermined reference value, updating an already stored offset value to the valid offset value currently judged to be valid; and

correcting the measured magnetic field data according to the updated offset value to compute azimuth data.

4. A compass sensor unit comprising:

a magnetic field data measuring means that inputs data from a geomagnetic sensor to measure magnetic field data;

a measurement data storing means that stores the magnetic field data;

a measurement data storing determining means that determines whether to store current measured magnetic field data based on a distance between the current measured magnetic field data and previous measured magnetic field data stored immediately before;

an offset calculating means that calculates an offset value based on the magnetic field data stored by the measurement data storing means;

an offset validity judging means that compares a plurality of the magnetic field data used for calculating the offset data with one anther for each component, and that judges the calculated offset value to be valid when a difference between a maximum value and a minimum value for each component of the magnetic field data is greater than a predetermined threshold value;

an offset storing means that updates an already stored offset value to the valid offset value judged to be valid and stores the valid offset value;

an offset setting means that adds the valid offset value stored in the offset storing section to the previous offset value stored in the offset storing means;

a computing section that removes the offset value set by the offset setting means from the magnetic field data; and

an azimuth measuring means that corrects the magnetic field data according to the offset value stored in the offset storing means to compute azimuth data.

5. The compass sensor unit according to claim 4, further comprising an integrator that integrates the magnetic field data outputted from the computing section.

6. The compass sensor unit according to claim 4, further comprising a detection section that monitors the magnetic field data to detect occurrence of overflow or underflow, such that when the occurrence of overflow or underflow of the data is detected, an appropriate correction value is inputted to the computing section to compensate for the overflow or underflow of the data.

7. The compass sensor unit according to claim 4, further comprising an offset magnitude determining means that compares the offset value judged to be valid by the offset validity judging means with a given reference value, the offset magnitude determining means being operative when the valid offset value is greater than the given reference value for outputting the valid offset value to the computing section, or being operative when the valid offset value is smaller than the given reference value for outputting the valid offset value to the azimuth measuring means.

8. The compass sensor unit according to claim 4, further comprising either of: a temperature sensor that detects temperature, and a temperature correction value calculating means that calculates a temperature correction value from the detected temperature and outputs the calculated temperature correction value to the azimuth measuring means; or a tilt sensor that detects a tilt of the geomagnetic sensor, and a tilt correction value calculating means that calculates a tilt correction value from the detected tilt and outputs the calculated tilt correction value to the azimuth measuring means.

9. The compass sensor unit according to claim 4, further comprising:

a temperature sensor that detects temperature;

a temperature correction value calculating means that calculates a temperature correction value from the detected temperature;

a tilt sensor that detects a tilt of the geomagnetic sensor;

a tilt correction value calculating means that calculates a tilt correction value from the detected tilt; and

a correction data determining means that compares current one and previous one of the temperature correction values calculated successively by the temperature correction value calculating means to determine whether to output the current temperature correction value to the azimuth measuring means, and that compares current one and previous one of the tilt correction values calculated successively by the tilt correction value calculating means to determine whether to output the current tilt correction value to the azimuth measuring means.

**10.** A portable electronic device provided with the compass sensor unit as set forth in claims 4 through 9.

**11.** An azimuth data computing method comprising the steps of:

successively measuring a magnetic field detected by a geomagnetic sensor as measurement data;
determining whether to store the current measurement data in a storage based on distances between the current measurement data and a plurality of the previous measurement data already stored in the storage;
sequentially storing the current measurement data in the storage when the current measurement data is determined to be stored;
calculating an offset value based on the plurality of the measurement data stored in the storage;
updating an old offset value which has been already set to a new offset value which is newly calculated; and
correcting the measurement data according to the updated offset value and computing azimuth data.

**12.** The azimuth data computing method according to claim 11, further comprising the steps of:

comparing a plurality of the measurement data used for the calculating of the offset value with one anther for each component, and judging the calculated offset value to be valid when a difference between a maximum value and a minimum value for each component of the measurement data is greater than a predetermined threshold value,

wherein the step of the updating updates the old offset value based on the new offset value when the new offset value is judged to be valid.

**13.** The azimuth data computing method according to claim 11, wherein the step of determining determines to store the measurement data when each of the distances on coordinates exceed a predetermined distance.

**14.** An azimuth data computing method comprising the steps of:

sequentially measuring a magnetic field detected by a geomagnetic sensor as measurement data in response to a request from an application program which uses azimuth data;
storing the measurement data in a storage;
erasing an oldest one of the stored measurement data from the storage when a number of the stored measurement data reaches a predetermined number while storing a new one of the measurement data in the storage;
calculating an offset value based on a plurality of the measurement data stored in the storage;
updating an offset value which has been already set to the offset value which is calculated; and
correcting the measurement data according to the updated offset value and computing the azimuth data.

**15.** An azimuth data computing method comprising the steps of:

sequentially measuring a magnetic field detected by a geomagnetic sensor to provide measurement data;
storing the measurement data in a storage;
when a number of the measurement data stored in the storage reaches a predetermined number and when new measurement data is provided, detecting one of the stored measurement data having a direction closest to the direction of the new measurement data, and replacing the detected measurement data by the new measurement data;
calculating an offset value based on a plurality of the measurement data stored in the storage;
updating an offset value which has been previously set to a new offset value which is newly calculated; and
correcting the measurement data according to the updated offset value and computing azimuth data.

**16.** A compass sensor unit comprising:

a magnetic field measuring means that inputs data from a geomagnetic sensor to measure magnetic field data;
a data storing determining means that determines whether to store current magnetic field data based on a distance between the current magnetic field data and previous magnetic field data stored immediately before;

an offset calculating means that calculates an offset value based on the stored magnetic field data;

an offset validity judging means that compares a plurality of the magnetic field data used for the calculating of the offset value with one anther for each component, and that judges the calculated offset value to be valid when a difference between a maximum value and a minimum value for each component of the stored magnetic field data is greater than a predetermined threshold value;

a data storing determination redoing means operative when the valid offset value is greater than a predetermined critical value for again determining whether to store the magnetic field data while removing the valid offset value from each stored magnetic field data;

an updating means operative when the valid offset value is smaller than the predetermined critical value for updating an already stored offset value according to the valid offset value currently judged to be valid; and

a computing means that corrects the measured magnetic field data by the updated offset value to compute azimuth data.

17. A compass sensor unit comprising:

a magnetic field data measuring means that sequentially measures a magnetic field detected by a ' geomagnetic sensor, thereby successively providing measurement data;

a determining means that determines whether to store current measurement data in a storage based on distances between the current measurement data and a plurality of previous measurement data already stored in the storage;

a storing means that sequentially stores the measurement data in the storage when the measurement data is determined to be stored;

an offset value calculating means that calculates an offset value based on the plurality of the measurement data stored in the storage;

an updating means that updates an old offset value which has been already set to the offset value which is calculated; and

a computing means that corrects the measurement data by the updated offset value to compute azimuth data.

18. A compass sensor unit comprising:

a measuring means that successively measures a magnetic field detected by a geomagnetic sensor to provide measurement data in response to a request from an application program which uses azimuth data;

a storing means that sequentially stores the measurement data;

a control means that erases the oldest one of the stored measurement data from the storage when a number of the stored measurement data reaches a predetermined number while storing new one of the measurement data in the storage;

a calculating means that calculates an offset value based on a plurality of the measurement data stored in the storage;

an updating means that updates an offset value which has been already set to the offset value which is calculated; and

a computing means that corrects the measurement data by the updated offset value to compute the azimuth data.

19. A compass sensor unit comprising:

a measuring means that successively measures a magnetic field detected by a geomagnetic sensor to provide measurement data;

a storing means that stores the measurement data in a storage;

a control means that operates when a number of the measurement data stored in the storage reaches a predetermined number for storing new measurement data by replacing one of the stored measurement data having a direction closest to the direction of the new measurement data;

a calculating means that calculates an offset value based on a plurality of the measurement data stored in the storage;

an updating means that updates an offset value which has been already set to the offset value which is calculated; and

a computing means that corrects the measurement data by the updated offset value to compute azimuth data.

# FIG. 1

TERMINAL UNIT-1

101

102 RF PART

103 MODEM PART

104 CDMA PART

105 SPEECH PROCESSING PART — MIC

106

107 GPS RECEIVER PART

108 MAIN CONTROL PART

109 ROM

110 RAM

111 ANNUNCIATOR MEANS

112 TIMER PART

114 SW

113 MAIN OPERATING PART (KEY INPUT PART)

115 AUXILIARY OPERATING PART

SP

116 IMAGE PICK-UP PART (ELECTRONIC CAMERA)

117 DISPLAY PART (LCD)

118 TOUCH PANEL

200 COMPASS SENSOR UNIT

TERMINAL UNIT-2

EP 1 772 704 A1

FIG. 2

200:COMPASS SENSOR UNIT

303:AMPLIFIER  304:ADDER

307

207

A/D CONVERTER

AZIMUTH
MEASURING MEANS

MAGNETIC
SENSOR (1)

MAGNETIC
SENSOR (2)

MAGNETIC
SENSOR (3)

302:SWITCHING
MEANS

305

D/A CONVERTER

MEASUREMENT
DATA STORAGE
DETERMINING MEANS

201

306

OFFSET MEMORY
PART

MEASUREMENT DATA
STORING MEANS

202

301:MAGNETIC SENSOR PART

OFFSET CALCULATING
MEANS

203

300:COMPASS SENSOR CHIP

OFFSET VALIDITY
JUDGING MEANS

204

206

OFFSET SETTING
MEANS

OFFSET STORING
MEANS

205

# FIG. 3

START

IS MEASUREMENT
TRIGGER ACTIVATED? ~S101
NO

YES

INPUT DATA FROM MAGNETIC
SENSOR TO MEASURE
MAGNETIC FIELD ~S102

S103~ DETERMINE WHETHER TO
STORE MEASUREMENT DATA
NO

YES

STORE MEASUREMENT DATA ~S104

CALCULATE OFFSET VALUE ~S105

IS OFFSET VALID? ~S106
NO

YES

END

UPDATE OFFSET ~S107

CALCULATE AZIMUTH ~S108

OUTPUT AZIMUTH ~S109

FIG. 4

200: COMPASS SENSOR UNIT
207 AZIMUTH MEASURING MEANS
307 A/D CONVERTER
201 MEASUREMENT DATA STORAGE DETERMINING MEANS
202 MEASUREMENT DATA STORING MEANS
203 OFFSET CALCULATING MEANS
204 OFFSET VALIDITY JUDGING MEANS
205 OFFSET STORING MEANS
206 OFFSET SETTING MEANS
309 INTEGRATOR
304: ADDER
303: AMPLIFIER
302: SWITCHING MEANS
305 D/A CONVERTER
306 OFFSET MEMORY PART
301: MAGNETIC SENSOR PART
300: COMPASS SENSOR CHIP
MAGNETIC SENSOR (1)
MAGNETIC SENSOR (2)
MAGNETIC SENSOR (3)

# FIG. 5

200:COMPASS SENSOR UNIT

EP 1 772 704 A1

# FIG. 6

```
            ┌─────────────┐
            │    START    │
            └──────┬──────┘
                   │
      ┌────────────┤
      │            ▼
   NO ◄──< IS MEASUREMENT        >── S201
          < TRIGGER ACTIVATED?   >
      │            │
      │           YES
      │            ▼
      │   ┌──────────────────────┐
      │   │ INPUT DATA FROM MAGNETIC │
      │   │ SENSOR TO MEASURE     │── S202
      │   │ MAGNETIC FIELD        │
      │   └──────────┬───────────┘
      │              ▼                        S204
      │      < DOES OVERFLOW OR >─S203  ┌──────────────────┐
      │      < UNDERFLOW OCCUR? > YES   │ CORRECT OVERFLOW │
      │      <                  >──────►│ OR UNDERFLOW     │
      │              │                  └────────┬─────────┘
      │             NO ◄──────────────────────────┘
      │              ▼
      │   ┌──────────────────────┐
      │   │ INPUT DATA FROM MAGNETIC │
      │   │ SENSOR TO MEASURE MAGNETIC │── S205
      │   │ FIELD                 │
      │   └──────────┬───────────┘
      │              │                          S211
      │              ├──────────────────┐   ┌──────────────────┐
      │              ▼          S206     ▼   │ CALCULATE AZIMUTH│
   NO ◄──< DETERMINE WHETHER TO >       └────────┬─────────┘
          < STORE MEASUREMENT DATA >             ▼
                     │                  ┌──────────────────┐
                    YES                 │ OUTPUT AZIMUTH   │
                     ▼                  └──────────────────┘
          ┌──────────────────────┐           S212
   S207 ──│ STORE MEASUREMENT DATA│
          └──────────┬───────────┘
                     ▼
          ┌──────────────────────┐
   S208 ──│ CALCULATE OFFSET VALUE│
          └──────────┬───────────┘
                     ▼
   NO ◄──< IS OFFSET VALID?      >── S209
      │              │
      ▼             YES
 ┌────────┐          ▼
 │  END   │ ┌──────────────────────┐
 └────────┘ │ UPDATE OFFSET        │── S210
            └──────────────────────┘
```

# FIG. 7

EP 1 772 704 A1

200: COMPASS SENSOR UNIT

302: SWITCHING MEANS

309 — OVERFLOW/UNDERFLOW DETECTION PART

303: AMPLIFIER

307

MAGNETIC SENSOR (1)

MAGNETIC SENSOR (2)

MAGNETIC SENSOR (3)

304: ADDER

A/D CONVERTER

207

AZIMUTH MEASURING MEANS

D/A CONVERTER ～305

MEASUREMENT DATA STORAGE DETERMINING MEANS ～201

-301: MAGNETIC SENSOR PART

OFFSET MEMORY PART ～306

MEASUREMENT DATA STORING MEANS ～202

-300: COMPASS SENSOR CHIP

OFFSET CALCULATING MEANS ～203

OFFSET VALIDITY JUDGING MEANS ～204

206～ OFFSET SETTING MEANS

## FIG. 8

200: COMPASS SENSOR UNIT

300: COMPASS SENSOR CHIP

301: MAGNETIC SENSOR PART

- MAGNETIC SENSOR (1)
- MAGNETIC SENSOR (2)
- MAGNETIC SENSOR (3)

302: SWITCHING MEANS

303: AMPLIFIER

304: ADDER

305 — D/A CONVERTER

306 — OFFSET MEMORY PART

307 — A/D CONVERTER

207 — AZIMUTH MEASURING MEANS

201 — MEASUREMENT DATA STORAGE DETERMINING MEANS

202 — MEASUREMENT DATA STORING MEANS

203 — OFFSET CALCULATING MEANS

204 — OFFSET VALIDITY JUDGING MEANS

208 — OFFSET MAGNITUDE DETERMINING MEANS

# FIG. 9

START

S301 — IS MEASUREMENT TRIGGER ACTIVATED? — NO

YES

S302 — INPUT DATA FROM MAGNETIC SENSOR TO MEASURE MAGNETIC FIELD

S303 — DETERMINE WHETHER TO STORE MEASUREMENT DATA — NO

S310 — CALCULATE AZIMUTH

YES

S304 — STORE MEASUREMENT DATA

S311 — OUTPUT AZIMUTH

S305 — CALCULATE OFFSET VALUE

S306 — IS OFFSET VALID? — NO

YES

END

S307 — IS OFFSET GREATER THAN GIVEN VALUE? — NO

YES

S308 — OUTPUT OFFSET VALUE TO OFFSET MEMORY PART

S309 — UPDATE OFFSET

# FIG. 10

# FIG. 11

200:COMPASS SENSOR UNIT

209
TEMPERATURE CORRECTION VALUE CALCULATING MEANS

210
TILT CORRECTION VALUE CALCULATING MEANS

300
COMPASS SENSOR CHIP

207
AZIMUTH MEASURING MEANS

201
MEASUREMENT DATA STORAGE DETERMINING MEANS

202
MEASUREMENT DATA STORING MEANS

203
OFFSET CALCULATING MEANS

204
OFFSET VALIDITY JUDGING MEANS

206
OFFSET SETTING MEANS

205
OFFSET STORING MEANS

EP 1 772 704 A1

FIG. 12

200:COMPASS SENSOR UNIT

209
TEMPERATURE CORRECTION
VALUE CALCULATING MEANS

211
CORRECTION DATA
JUDGING MEANS

210
TILT CORRECTION VALUE
CALCULATING MEANS

300
COMPASS SENSOR
CHIP

207
AZIMUTH
MEASURING MEANS

201
MEASUREMENT DATA STORAGE
DETERMINING MEANS

202
MEASUREMENT DATA
STORING MEANS

203
OFFSET CALCULATING
MEANS

204
OFFSET VALIDITY
JUDGING MEANS

OFFSET SETTING MEANS

206

OFFSET STORING
MEANS

205

EP 1 772 704 A1

33

# FIG. 13A

# FIG. 13B

## INTERNATIONAL SEARCH REPORT

| | International application No. |
|---|---|
| | PCT/JP2005/013953 |

A. CLASSIFICATION OF SUBJECT MATTER
*G01C17/38* (2006.01), *G01R33/02* (2006.01)

According to International Patent Classification (IPC) or to both national classification and IPC

B. FIELDS SEARCHED

Minimum documentation searched (classification system followed by classification symbols)
*G01C17/38* (2006.01), *G01R33/02* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2004/003476 A  (Asahi Kasei Corp.), | 1,14,18 |
| Y | 04 January, 2004 (04.01.04), | 2 |
| | Page 19, line 25 to page 20, line 19 | |
| | & EP 1519148 A1 | |
| Y | JP 2003-294447 A  (Asahi Kasei Corp.), | 2 |
| | 15 October, 2003 (15.10.03), | |
| | Par. Nos. [0046] to [0048] | |
| | (Family: none) | |
| A | JP 2003-90726 A  (Yamaha Corp.), | 8-10 |
| | 28 March, 2003 (28.03.03), | |
| | Claim 1 | |
| | & EP 1275933 A2        & US 2005-101344 A | |
| | & CN 1396436 A | |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11 October, 2005 (11.10.05) | 22 November, 2005 (22.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/013953 |

C (Continuation).    DOCUMENTS CONSIDERED TO BE RELEVANT

| Category* | Citation of document, with indication, where appropriate, of the relevant passages | Relevant to claim No. |
| --- | --- | --- |
| E,A | JP 2005-249619 A  (Mitsubishi Electric Corp.), 15 September, 2005 (15.09.05), Par. No. [0045] (Family: none) | 16 |

Form PCT/ISA/210 (continuation of second sheet) (April 2005)

**EP 1 772 704 A1**

**Patent documents cited in the description**

- JP 2004012416 A

- WO 2004003476 A